Europäisches Patentamt

(19) European Patent Office

Office européen des brevets

(11) Numéro de publication : **0 242 844 B1**

## (12) FASCICULE DE BREVET EUROPEEN

(45) Date de publication du fascicule du brevet :
**19.06.91 Bulletin 91/25**

(51) Int. Cl.$^5$ : **G02B 26/06**

(21) Numéro de dépôt : **87105825.1**

(22) Date de dépôt : **21.04.87**

---

(54) **Miroir a surface modulable pour system optique adaptateur de front d'onde.**

---

(30) Priorité : **23.04.86 FR 8605866**

(43) Date de publication de la demande :
**28.10.87 Bulletin 87/44**

(45) Mention de la délivrance du brevet :
**19.06.91 Bulletin 91/25**

(84) Etats contractants désignés :
**AT BE CH DE ES FR GB GR IT LI LU NL SE**

(56) Documents cités :
**FR-A- 2 287 134**
**US-A- 3 828 143**
**US-A- 3 967 899**
**US-A- 4 130 624**

(56) Documents cités :
**APPLIED OPTICS, vol. 21, no. 4, 15 février 1982, pages 580-588, Optical Society of America, New York, US; R.H. FREEMAN et al.: "Deformable mirrors for all seasons and reasons"**
**PROCEEDINGS OF THE IEEE, vol. 66, no. 6, juin 1978, pages 651-697, IEEE; J.W. HARDY: "Active optics: A new technology for the control of light"**

(73) Titulaire : **COMPAGNIE GENERALE D'ELECTRICITE Société anonyme dite:**
**54, rue La Boétie**
**F-75382 Paris Cédex 08 (FR)**

(72) Inventeur : **Jagourel, Pascal**
**31 rue Descartes**
**F-94200 Ivry sur Seine (FR)**

(74) Mandataire : **Weinmiller, Jürgen et al**
**Lennéstrasse 9 Postfach 24**
**W-8133 Feldafing (DE)**

---

## Description

Miroir à surface modulable pour système optique adaptateur de front d'onde.

La présente invention concerne un miroir à surface modulable, c'est-à-dire déformable. Ce miroir trouve son emploi dans un système optique adaptateur de front d'onde. Il est d'un type comme défini dans le préambule de la revendication 1.

Dans un miroir connu de ce type voir PROCEEDINGS OF THE IEEE, vol. 66, no. 6, juin 1978, pages 651-697, IEEE ; J.W. HARDY : "Active optics : A new technology for the control of light", Fig. 38, la plaque est en verre, de forme circulaire et revêtue sur une de ses faces d'une couche d'aluminium réfléchissante ; la pièce rigide est un disque épais en céramique piézoélectrique. N éléments électriquement conducteurs sont régulièrement répartis sur une première face plane du disque, ces éléments étant munis de fils de connexion traversant l'épaisseur du disque. Une couche électriquement conductrice est déposée sur la deuxième face plane du disque. La première face plane du disque est fixée sur la plaque, du côté opposé de sa face réfléchissante. Le disque, les éléments conducteurs et la couche conductrice forment un système piézoélectrique comprenant N paires d'électrodes, chaque paire comportant un desdits éléments conducteurs et la couche conductrice qui forme une électrode commune. Lorsqu'on applique une différence de potentiel électrique sur une paire d'électrodes, on provoque une déformation locale de la plaque au voisinage de l'élément conducteur de cette paire d'électrodes.

On sait que, d'une manière générale, les miroirs à surface déformable peuvent être utilisés pour adapter la phase de différentes portions de la section d'un faisceau laser de façon à obtenir après concentration du faisceau une énergie maximale sur une cible. Le faisceau laser peut être alors réfléchi successivement sur deux miroirs à surface déformable, avant d'être concentré sur la cible, une partie de l'énergie laser renvoyée par la cible étant reçue par un circuit de traitement à travers un récepteur. Les différentes paires d'électrodes du premier miroir, dit miroir de modulation, sont alimentées par une source électrique respectivement à des fréquences différentes l'une de l'autre, de façon à moduler N portions de la section du faisceau laser à ces fréquences différentes ; le deuxième miroir, dit miroir de correction, est connecté à la sortie du circuit de traitement et est muni aussi de N paires d'électrodes pour corriger la phase des N portions du faisceau. Le circuit de traitement capte à travers le récepteur les fréquences caractéristiques des N portions du faisceau, de façon à commander l'alimentation électrique des électrodes correspondantes du miroir de correction.

Pour que le circuit de traitement puisse reconnaître plus efficacement les N portions du faisceau, il est intéressant que chaque paire d'électrodes du premier miroir soit alimentée par une tension électrique dont la fréquence résulte d'une combinaison linéaire de fréquences, les N combinaisons étant différentes l'une de l'autre. Le principe de cette alimentation dite modale est exposé dans l'article "Adaptive optic modal control" (J.P. Gaffard et al) "Cleo' 84" "Conférence on Lasers and Electro-optics" June 19-22, 1984, pages 1 à 10 et 1 à 6.

Le miroir à surface déformable connu, décrit plus haut, présente un inconvénient car chaque transducteur ne peut fonctionner que dans une plage de fréquence déterminée. Dans la présente invention on réalise une symétrie complète de la structure modulable de telle sorte que tous les transducteurs puissent être sollicités dans une très large bande de fréquences uniquement limitée par la première fréquence propre longidutinale des transducteurs. Il est alors possible de réaliser des combinaisons modales des différentes fréquences de modulation.

Dans ce but, la présente invention a pour objet un miroir comme défini dans la revendication 1.

Le miroir selon l'invention peut présenter aussi au moins une des caractéristiques secondaires suivantes

– la pièce rigide et la plaque sont constituées par un même métal qui peut être le molybdène,
– les premier et deuxième poussoirs ont une forme hémisphérique,
– les premier et deuxième poussoirs sont en alumine,
– les premier et deuxième poussoirs disposés de part et d'autre de chaque transducteur ainsi que le fond du capuchon en contact avec le deuxième poussoir sont munis chacun d'un orifice axial, les orifices du deuxième poussoir et du fond du capuchon permettant de laisser passer un fil de connexion reliant une électrode du transducteur auxdits moyens d'alimentation,
– chaque transducteur comporte un tube en céramique piezoélectrique, ce tube étant muni sur ses surfaces cylindriques extérieure et intérieure respectivement de deux couches conductrices formant une première et une deuxième électrodes, la première électrode étant en contact avec la paroi interne de la percée dans laquelle le transducteur est disposé,
– chaque transducteur comporte un empilage axial de tubes en céramique piezoélectrique, des couches conductrices étant disposées sur des faces planes de ces tubes, certaines de ces couches étant en contact avec la paroi interne de la percée dans laquelle le transducteur est disposé pour former une première électrode, les autres couches étant connectées électriquement à l'intérieur des tubes pour former une deuxième électrode.

Des formes particulières d'exécution de l'objet de la présente invention sont décrites ci-dessous, à titre d'exemple, en référence aux dessins annexés dans lesquels

- la figure 1 représente une vue extérieure d'un mode de réalisation du tiroir selon l'invention,
- la figure 2 est une vue en coupe par un plan axial du miroir illustré par la figure 1,
- la figure 3 représente en coupe axiale un mode de réalisation d'un transducteur, qui peut être utilisé pour réaliser le tiroir illustré par la figure 1,
- la figure 4 représente en coupe axiale un autre mode de réalisation d'un transducteur, qui peut être utilisé pour réaliser le miroir illustré par la figure 1
- et la figure 5 est un schéma d'un système optique adaptateur de front d'onde, utilisant le miroir illustré par la figure 1.

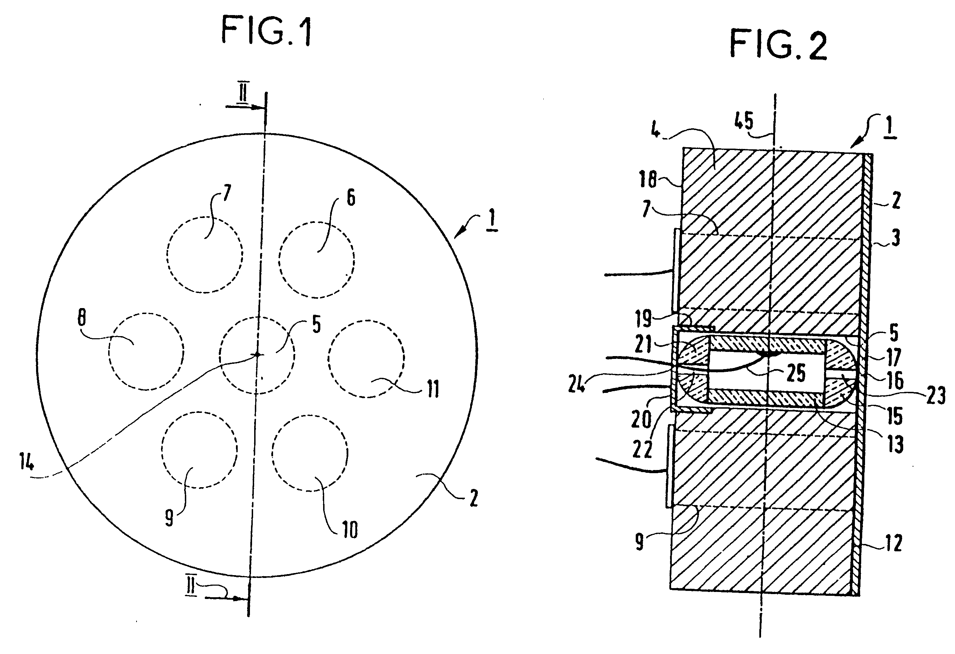

Sur les figures 1 et 2, est représenté un miroir 1 à surface déformable. Le miroir 1 comporte une plaque 2 circulaire en molybdène dont une face principale 3 est polie pour constituer la surface réfléchissante du miroir. Le miroir 1 comporte en outre une pièce rigide 4 également en molybdène, ayant la forme générale d'un cylindre de révolution de diamètre égal à celui de la plaque 2. La pièce 4 comporte sept percées cylindriques 5 à 11, identiques entre elles, et dont les axes sont perpendiculaires aux bases du cylindre formant la pièce 4. Avantageusement, ces sept percées sont uniformément réparties sur la surface desdites bases : une percée centrale 5 est disposée suivant l'axe 14 de la pièce 4, les 6 autres percées étant disposées autour de la percée 5, leurs axes étant placés aux sommets d'un hexagone centré sur l'axe du cylindre, de façon que la distance des axes de ces six autres percées à l'axe 14 soit égale au côté de l'hexagone. La face principale de la plaque 2, opposée à la face réfléchissante 3, est fixée sur toute la surface plane d'une base 12 de la pièce 4. Cette fixation peut être réalisée par exemple par une brasure à l'or.

A l'intérieur de chacune de ces percées est disposé coaxialement un transducteur piezoélectrique 13 de forme cylindrique. Entre une base plane du transducteur 13 et la plaque 2 est disposé un poussoir 15 hémisphérique, en alumine, dont la surface courbe est en contact avec une zone centrale 16 de la partie 17 de la plaque 2 en regard du transducteur 13. La surface plane du poussoir 15 est en contact avec le transducteur 13.

La percée 5 est obturée, sur la base 18 de la pièce 4, opposée à la plaque 2, par un capuchon 19 en molybdène muni d'un fond plat 20 situé sensiblement suivant le plan de la base 18. Ce capuchon 19 peut être fixé sur la pièce 4 à l'intérieur de la percée 5 par exemple par vissage. Entre le fond 20 du capuchon 19 et le transducteur 13, est disposé un poussoir 21 hémisphérique en alumine, identique au poussoir 15.

La face courbe du poussoir 21 est en contact avec une zone centrale du fond 20 du capuchon 19, tandis que la face plane du poussoir 21 est en contact avec le transducteur 13. Comme il est visible sur la figure 2, les poussoirs du miroir sont munis d'un orifice axial 22, 23. Les fonds plats 20 des capuchons 19 sont munis d'un orifice axial 24. Comme il sera vu en détail plus loin, le transducteur 13 comporte deux électrodes. Sur une de ces électrodes, est fixé un fil de connexion 25 qui traverse les orifices 22 et 24.

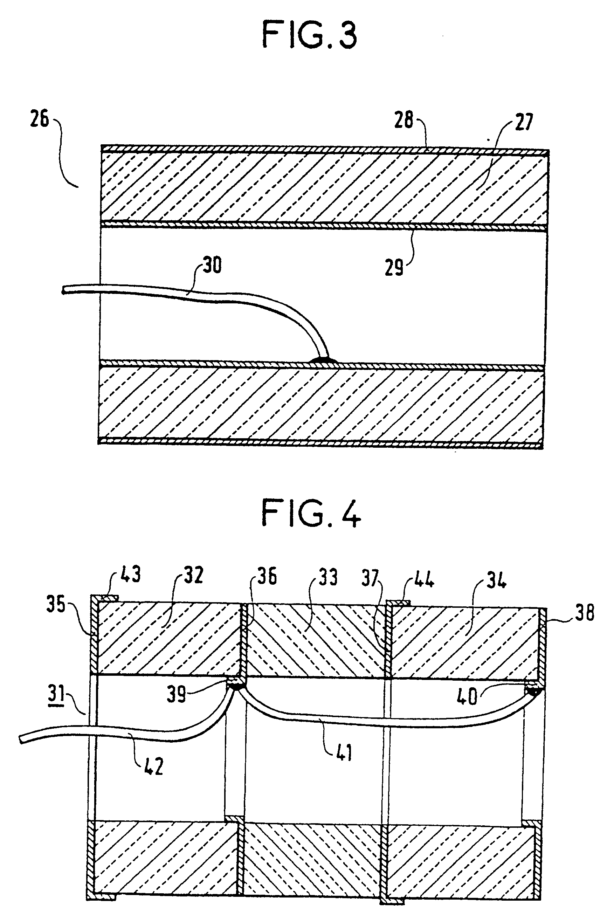

Les figures 3 et 4 représentant deux modes de réalisation d'un transducteur capable d'être utilisé pour réaliser un miroir à surface déformable, du type de celui illustré par les figures 1 et 2.

La figure 3 montre un transducteur 26 comportant un bloc tubulaire 27 en céramique piezoélectrique. Sur les surfaces cylindriques extérieure et intérieure du bloc 27 sont déposées des couches conductrices 28 et 29 formant les électrodes du transducteur. Dans le volume interne du bloc 27 est visible un fil de connexion électrique 30 dont une extrémité est soudée sur la couche intérieure 29. L'autre extrémité du fil de connexion 30 traverse l'orifice du capuchon et celui du poussoir en contact avec ce capuchon comme il est expliqué plus haut. La couche extérieure 28 est en contact avec la paroi de la percée dans laquelle le transducteur est logé. On voit donc que la masse de la pièce 4 est reliée à une électrode de chacun des transducteurs, le fil de connexion tel que 30 étant relié à l'autre électrode du transducteur.

La figure 4 montre un transducteur 31 comportant un empilage axial de blocs tubulaires 32, 33, 34 en céramique piezoélectrique. Des couches conductrices 35, 36, 37, 38 sont disposées sur les faces planes de ces blocs. Les couches 36 et 38 comportent des rebords 39 et 40 sur la surface interne des blocs. Ces rebords sont reliés entre eux par un fil de connexion 41, sur lequel est soudé un fil de connexion 42 traversant l'orifice du capuchon et du poussoir correspondant. Les couches 35 et 37 comportent des rebords 43 et 44 sur la surface externe des blocs, ces rebords étant en contact avec la masse de la pièce 4 par la paroi de la percée dans laquelle le transducteur 31 est disposée. Dans ce cas également, la masse de la pièce 4 est reliée à une électrode de chacun des transducteurs.

De nouveau en référence à la figure 2, le transducteur 13 et les deux poussoirs 15 et 21 sont disposés dans la percée 5 en vissant le capuchon 19 de façon que la plaque 2 et le fond 20 du capuchon 19 exercent une légère pression sur les poussoirs, cette pression étant transmise au transducteur par ces poussoirs. Bien entendu, cette pression est la même pour tous les transducteurs du miroir.

De plus, l'épaisseur du fond 20 du capuchon 19 est déterminée pour que la courbe de déformation de ce fond en fonction de la pression axiale soit sensiblement identique à la courbe de déformation de la partie 17 de la plaque 2.

Le dispositif représenté sur les figures 1 et 2 fonctionne de la manière suivante. Lorsqu'on applique une tension électrique entre les électrodes du transducteur 13, c'est à dire entre le fil de connexion 25 et la masse de la pièce 4, la partie 17 de la plaque se déforme. Le point central de la partie 17 présente une déformation maximale suivant l'axe du transducteur, tandis que la périphérie circulaire de cette partie 17 fixée sur la pièce 4 ne se déforme pas. Le profil de la déformation peut être assimilé à une gaussienne. De même, les courbes de réponse en gain et en phase en fonction de la fréquence, tracées pour les différents transducteurs montés dans leurs logements sont sensiblement identiques entre elles.

On a constaté aussi qu'il était avantageux que chaque transducteur monté dans son logement présente une symétrie statique et dynamique par rapport au plan médian 45 (voir figure 2) parallèle aux faces planes de la pièce 4 et la coupant au milieu de son épaisseur. C'est la raison pour laquelle les poussoirs 15 en contact avec la plaque 2 sont munis d'orifices axiaux 23, comme les poussoirs 21 en contact avec le capuchon 21. Si cette symétrie est respectée, on arrive plus facilement à déterminer les dimensions à donner au miroir, dans chaque cas particulier, pour que le gain et la phase reste sensiblement constants dans un intervalle de fréquence aussi grand que possible. C'est un avantage important lorsqu'on désire utiliser le miroir avec une alimentation électrique modale pour réaliser un système optique adaptateur du front d'onde.

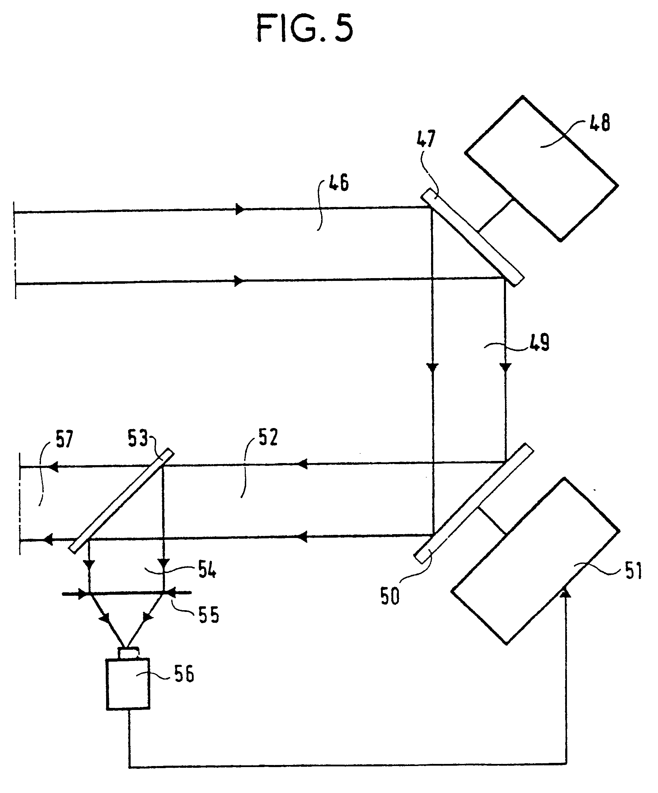

La figure 5 montre un schéma d'un système optique adaptateur de front d'onde. Ce système comprend un générateur non représenté émettant un faisceau laser 46 qui est reçu par un miroir de modulation 47 selon l'invention à sept transducteurs, le miroir 47 étant relié à la sortie d'une source d'alimentation électrique 48. Le faisceau 49 renvoyé par le miroir 47 est reçu par un miroir de correction 50 à surface déformable, de type conventionnel, relié à la sortie d'un circuit d'alimentation électrique 51. Le faisceau 52 renvoyé par le miroir 50 est divisé en deux parties par une lame optique 53 partiellement réfléchissante. La plus petite de ces parties est réfléchie suivant un faisceau 54 concentré par un système optique 55 sur la surface photosensible d'un récepteur 56 relié électriquement à l'entrée du circuit 51. Le faisceau 57 traversant la lame 53 est utilisé par exemple pour effectuer un traitement thermique.

Les sept transducteurs du miroir 47 sont alimentés électriquement par la source 48, respectivement suivant sept combinaisons linéaires de fréquences qui sont comprises par exemple entre 30 et 60 kHz, de façon à définir sept portions différentes du faisceau laser. Le miroir 50 comporte aussi sept transducteurs agissant sur ces sept portions. Le récepteur 56 est capable de reconnaître efficacement ces sept portions et de commander le circuit 51 pour corriger la phase de chacune des sept portions de façon à obtenir une énergie maximale pour le faisceau 57. Cette reconnaissance peut s'effectuer sans ambiguité puisque les courbes de réponse des différents moteurs du miroir sont identiques dans la gamme de fréquence de modulation.

Le miroir à surface déformable selon l'invention, présente l'avantage de pouvoir être refroidi efficacement, en cas de besoin, par circulation d'un fluide, par exemple de l'eau, dans des canalisations (non représentées) disposées dans la pièce rigide sous la surface de la plaque réfléchissante.

## Revendications

1. Miroir à surface modulable pour système optique adaptateur de front d'onde, comportant
   – une plaque (2) ayant une face principale réfléchissante (3),
   – une pièce rigide (4) ayant une épaisseur grande par rapport à celle de la plaque, cette épaisseur étant comprise entre une première (12) et une deuxième (18) bases planes, parallèles entre elles, opposées l'une par rapport à l'autre, et de mêmes dimensions extérieures que celles des faces de la plaque (2), cette pièce étant munie de N percées cylindriques, (5-11) identiques entre elles, traversant ladite épaisseur de la première (12) à la deuxième (18) bases planes perpendiculairement à ces bases, et ladite plaque (2) étant fixée par son autre face principale sur toute la surface de la première base plane de la pièce rigide (4),
   – un dispositif piezoélectrique comprenant N transducteurs électromécaniques cylindriques (13), identiques entre eux, en contact respectivement avec N parties de l'autre face principale de la plaque (2), ces transducteurs étant munis respectivement de N paires d'électrodes,
   – et des moyens d'alimentation électrique (48, Fig. 5) des N paires d'électrodes pour provoquer respectivement une déformation locale de N portions de la surface de la plaque,
   caractérisé en ce que
   – les N transducteurs (13) sont disposés coaxialement respectivement à l'intérieur des N percées (5)
   – et en ce que ledit miroir comporte en outre
      • un premier poussoir (15), présentant une surface courbe, interposé entre chaque transducteur (13) et la partie (17) de l'autre face principale de la plaque (2) en regard de ce transducteur, de manière que la surface courbe du premier poussoir (15) soit en contact avec une zone centrale (16) de ladite partie (17) de l'autre face principale de la plaque (2), cette partie (17) constituant ladite portion capable d'être déformée,

• N capuchons (19) comprenant un fond plat (20), fixés sur ladite pièce rigide (4) de façon que les fonds plats soient disposés sensiblement suivant la deuxième base plane (18) de la pièce rigide (4) pour obturer respectivement lesdites percées (5), les gonds plats ayant sensiblement la même épaisseur et étant constitués par le même matériau que la plaque (17) de manière à assurer la symétrie de rigidité du montage du miroir par rapport à un plan médian (45) passant à mi-épaisseur de la pièce rigide (4)

• et un deuxième poussoir (21) présentant une surface courbe, interposé entre chaque transducteur (13) et le fond plat (20) du capuchon (19) en regard de ce transducteur (13), de manière que la surface courbe du deuxième poussoir (21) soit an contact avec une zone centrale du fond plat (20) du capuchon (19), lesdits premier et deuxième poussoirs (15, 21) étant identiques entre eux de manière que la symétrie de masse du montage par rapport au plan médian (45) soit assurée.

2. Miroir selon la revendication 1, caractérisé en ce que la pièce rigide (4) et la plaque (2) sont constitués par un même métal.

3. Miroir selon la revendication 2, caractérisé en ce que ledit métal est la molybdène.

4. Miroir selon la revendication 1, caractérisé en ce que les premiers et deuxièmes poussoirs (15, 21) ont une forme hémisphérique.

5. Miroir selon la revendication 1 caractérisé en ce que les premiers et deuxièmes poussoirs (15, 21) sont en alumine.

6. Miroir selon la revendication 1, caractérisé en ce que les premier et deuxième poussoirs (15, 21) disposés de part et d'autre de chaque transducteur (13) ainsi que le fond plat (20) du capuchon (19) en contact avec le deuxième poussoir (21) sont munis chacun d'un orifice axial (23, 22), les orifices du deuxième poussoir (22) et du fond (20) du capuchon (19) permettant de laisser passer un fil de connexion (25) reliant une électrode du transducteur (13) auxdits moyens d'alimentation (48).

7. Miroir selon la revendication 1, caractérisé en ce que chaque transducteur (26) comporte un tube en céramique piézoélectrique, ce tube étant muni sur ses surfaces cylindriques extérieure et intérieure respectivement de deux couches conductrices (28, 29) formant une première et une deuxième électrodes, la première électrode étant en contact avec la paroi interne de la percée dans laquelle le transducteur est disposé.

8. Miroir selon la revendication 1, caractérisé en ce que chaque transducteur (31) comporte un empilage axial de tubes (32, 33, 34) en céramique piézoélectrique, des couches conductrices (35 à 38) étant disposées sur des faces planes de ces tubes, certaines de ces couches (35, 37) étant en contact avec la paroi interne de la percée dans laquelle le transducteur est disposé pour former une première électrode, les autres couches (36, 38) étant connectées électriquement à l'intérieur des tubes pour former une deuxième électrode.

## Ansprüche

1. Spiegel mit modulierbarer Oberfläche für ein optisches System zur Anpassung der Wellenfront,
– mit einer eine reflektierende Hauptseite (3) aufweisenden Platte (2),
– mit einem starren Bauteil (4), dessen Dicke groß im Vergleich zu der der Platte ist und die zwischen einer ersten und zweiten ebenen Basis (12, 18) liegt, welche zueinander parallel verlaufen und einander gegenüberliegen sowie dieselben äußeren Abmessungen besitzen wie die Seiten der Platte (2), wobei dieses Bauteil N zylindrische einander gleiche Löcher (5 bis 11) aufweist, die die Dicke des Bauteils von der ersten (12) bis zur zweiten ebenen Basis (18) senkrecht zu diesen durchqueren, wobei die Platte (2) mit ihrer anderen Hauptseite auf der ganzen Oberfläche der ersten ebenen Basis des starren Bauteils (4) befestigt ist,
– mit einer piezoelektrischen Vorrichtung aus N einander gleichen zylindrischen elektromechanischen Transduktoren (13), die mit N Bereichen der anderen Hauptseite der Platte (2) in Kontakt stehen, wobei diese Transduktoren mit N Elektrodenpaaren versehen sind,
– und mit elektrischen Energieversorgungsmitteln (48, Figur 5) für die N Elektrodenpaare, die geeignet sind, eine örtliche Verformung einzelner von ingsgesamt N Zonen der Oberfläche der Platte hervorzurufen, dadurch gekennzeichnet, daß die N Transduktoren (13) koaxial im Inneren der N Löcher (5) angeordnet sind und daß der Spiegel außerdem aufweist :
– ein erstes Druckorgan (15) mit einer gekrümmten Oberfläche, das zwischen je einem Transduktor (13) und dem Bereich (17) der anderen Hauptseite der Platte (2) gegenüber diesem Transduktor eingefügt ist, so daß die gekrümmte Oberfläche des ersten Druckorgans (15) mit einer zentralen Zone (16) dieses Bereichs (17) der anderern Hauptseite der Platte (2) in Kontakt steht, wobei dieser Bereich (17) die verformbare Zone darstellt,
– N Kappen (19) mit einem ebenen Boden (20), die auf dem starren Bauteil (4) so befestigt sind, daß der ebene Boden im wesentlichen in der Ebene der zweiten ebenen Basis (18) des starren Bauteils (14) liegt, um je eines der Löcher (5) zu verschließen, wobei die ebenen Böden im wesentlichen dieselbe Dicke haben und aus demselben Material bestehen wie die Platte (17), so daß sich eine Symmetrie der Starrheit der Montage des Spiegels bezüglich einer mittleren durch das Bauteil (4) in der Mitte von dessen Dicke verlaufenden Ebene (45) ergibt,

– und ein zweites Druckorgan (21), das eine gekrümmte Oberfläche aufweist und zwischen je einen Transduktor (13) und den ebenen Boden (20) der Kappe (19) gegnüber diesem Transduktor (13) eingefügt ist, so daß die gekrümmte Oberfläche des zweiten Druckorgans (21) mit einer zentralen Zone des flachen Bodens (20) der Kappe (19) in Kontakt steht, wobei die beiden Druckorgane (15, 21) einander gleichen, so daß sich eine Massensymmetrie der Montage bezüglich einer mittleren Ebene (45) ergibt.

2. Spiegel nach Anspruch 1, dadurch gekennzeichnet, daß das starre Bauteil (4) und die Platte (2) aus demselben Metall bestehen.

3. Spiegel nach Anspruch 2, dadurch gekennzeichnet, daß das Metall Molybdän ist.

4. Spiegel nach Anspruch 1, dadurch gekennzeichnet, daß die beiden Druckorgane (15, 21) die Form einer Halbkugel besitzen.

5. Spiegel nach Anspruch 1, dadurch gekennzeichnet, daß die beiden Druckorgane (15, 21) aus Aluminiumoxid sind.

6. Spiegel nach Anspruch 1, dadurch gekennzeichnet, daß die beiden Druckorgane (15, 21), die zu beiden Seiten eines Transduktors (13) liegen, sowie der ebene Boden (20) der (19), der mit dem zweiten Druckorgan (21) in Berührung steht, je eine axiale Öffnung (23, 22) besitzen, wobei die Öffnungen im zweiten Druckorgan (22) und im Boden (20) der Kappe (19)den Durchlaß eines Anschlußdrahts (25) ermöglichen, der eine Elektrode des Transduktors (13) an die Energieversorgungsmittel (48) anschließt.

7. Spiegel nach Anspruch 1, dadurch gekennzeichnet, daß jeder Transduktor (26) ein Rohr aus piezoelektrischer Keramik besitzt, das auf seinen zylindrischen Außen- und Innenflächen je eine leitende Schicht (28, 29) trägt, die eine erste und eine zweite Elektrode bilden, wobei die erste Elektrode in Kontakt mit der Innenwand des Lochs steht, in dem der Transduktor angeordnet ist.

8. Spiegel nach Anspruch 1, dadurch gekennzeichnet, daß jeder Transduktor (31) einen axialen Stapel von Rohren (32, 33, 34) aus piezoelektrischer Keramik besitzt, wobei leitende Schichten (35 bis 38) auf den ebenen Oberflächen dieser Rohre angebracht sind und einzelne dieser Schichten (35, 37) mit der Innenwand des Lochs in Kontakt stehen, in dem der Transduktor angeordnet ist, um eine erste Elektrode zu bilden, während die anderen Schichten (36, 38) elektrisch an die Innenseite der Rohre angeschlossen sind, um eine zweite Elektrode zu bilden.

## Claims

1. A mirror whose surface can be modulated, for an optical system of the wavefront matching type, comprising

– a plate (2) having a reflecting main surface (3),

– a rigid member (4) whose thickness is large compared to that of the plate, this thickness being defined between a first (12) and a second plane basis (18) which are mutually parallel and opposite to each other, the outer dimensions of the bases being equal to that of the surfaces of the plate (2), this member being supplied with N cylindrical holes (5 to 11) which are identical to each other and which pass through said thickness from the first (12) to the second plane basis (18) perpendicularly to the latter, said plate (2) being fixed via its other main surface onto the entire surface of the first plane basis of the rigid member (4),

– a piezoelectric device comprising N electromechanical cylindrical transducers (13) which are mutually identical and respectively in contact with N zones of the other main surface of the plate (2), these transducers being respectively supplied with N electrode pairs,

– and electrical supply means (48, figure 5) for the N electrode pairs in order to cause a respective one of N portions of the plate surface to be deformed, characterized in that the N transducers (13) are respectively disposed coaxially inside the N holes (5) and that said mirror further comprises

– a first pushing member (15) having a convex surface and being interposed between a respective transducer (13) and the zone (17) of the second main surface of the plate (2) aligned to said transducer in such a way that the convex surface of the first pushing member (15) is in contact with a central area (16) of said zone (17) of the second main surface of the plate (2), this zone (17) constituting said portion whih may be deformed,

– N caps (19) including a flat bottom (20) and fixed to said rigid member (4) such that the flat bottoms are substantially disposed level with the second plane basis (18) of the rigid member (4) in order to close a respective one of said holes (5), the flat bottoms having substantially the same thickness and being constituted by the same material as the plate (17) in order to ensure the symmetry of mounting rigidity of the mirror with respect to a central plane (45) passing at half-thickness through the rigid member (4),

– and a second pushing member (21) having a convex surface and being interposed between each transducer (13) and the flat bottom (20) of the cap (19) in correspondence with said transducer (13) such that the convex surface of the second pushing member (21) is in contact with a central zone of the flat bottom (20) of the cap (19), said first and second pushing members (15, 21) being mutually identical in order to ensure the mass assembly symmetry with respect to the central plane (45).

2. A mirror according to claim 1, characterized in that the rigid member (4) and the plate (2) are constituted of the same metal.

3. A mirror according to claim 2, characterized in that said metal is molybdenum.

4. A mirror according to claim 1, characterized in that said first and second pushing members (15, 21) are hemispherically shaped.

5. A mirror according to claim 1, characterized in that said first and second pushing members (15, 21) are made of alumina.

6. A mirror according to claim 1, characterized in that said first and second pushing members (15, 21) disposed on either side of each transducer (13) and the flat bottom (20) of the cap (19) which is in contact with the second pushing member (21) are each supplied with an axial throughhole (23, 22), the throughholes of the second pushing member (22) and of the bottom (20) of the cap (19) allowing a connection wire (25) to pass through, said wire connecting a transducer electrode (13) to said supply means (48).

7. A mirror according to claim 1, characterized in that each transducer (26) comprises a piezoelectric ceramic tube which is supplied on its outer and inner cylindrical surfaces respectively with two conducting layers (28, 29) constituting a first and a second electrode, the first electrode being in contact with the inner wall of the hole in which the transducer is disposed.

8. A mirror according to claim 1, characterized in that each transducer (31) comprises an axial stack of tubes (32, 33, 34) made of piezoelectric ceramic material, conducting layers (35 to 38) being disposed on the plane surfaces of these tubes, certain ones of these layers (35, 37) being in contact with the inner wall of the hole in which the transducer is disposed for constituting a first electrode while the other layers (36, 38) are electrically interconnected at the inside of the tubes in order to constitute a second electrode.

# FIG.1

# FIG.2

EP 0 242 844 B1

# FIG.3

# FIG.4

# FIG. 5